# EUROPÄISCHE PATENTANMELDUNG

(11) **EP 0 979 610 A1**
(43) Veröffentlichungstag der Anmeldung: **16.02.2000**
(21) Anmeldenummer: 99250273.2
(22) Anmeldetag: 13.08.1999
(51) Int. Cl.: A23C 9/18, A23C 1/08, A23C 9/15

(54) **Geformte Festprodukte aus Milchpulver**

(30) Priorität: 13.08.1998 DE 29814822 U
(71) Anmelder: Immergut-Dauermilch GmbH, 17153 Stavenhagen (DE)
(72) Erfinder: Weise, Klaus, Dipl.-Ing, 17153 Stavenhagen (DE)
(74) Vertreter: Bröseke, Eribert, Dipl.-Ing.

(57) **Zusammenfassung**

Die Erfindung betrifft ein geformtes Festprodukt aus Milchpulver

Die Formung des Festproduktes erfolgt aus einer wässrigen Lösung, wobei die in eine Form gegossene Lösung gefriergetrocknet wird. Zur Formung wird eine wässrige Lösung eingesetzt, die 20 bis 35 Gew.-% Magermilchpulver, 0,1 bis 5 Gew.-% Milcheiweiß und 0,05 bis 1,0 Gew.-% eines Phosphatpuffersalzes enthält.

## Beschreibung

Gegenstand der Erfindung sind geformte Festprodukte aus Milchpulver.

Milchpulver und Milchpulverprodukte werden schon lange als Ersatz für flüssige Milch oder Kondensmilch zum "Weißen" von Kaffee oder Tee angeboten und verwendet. Sie bieten den Vorteil länger haltbar zu sein als die flüssigen Produkte. Auch weisen die pulverförmigen Ersatzprodukte ein geringeres Gewicht und Volumen auf. Nachteilig ist jedoch ihre schlechte Portionierbarkeit, insbesondere in der Gastronomie und auf Reisen. Es werden zwar Portionsbeutel angeboten, deren Aufreißen bereitet aber häufig Schwierigkeiten und führt nicht selten zu einem teilweisen Verschütten des Pulvers.

Aus der DB-Schrift 92 10 989 U1 sind Preßformen aus Milchpulver oder Milchpulverersatz in Form von Tabletten, Kegeln, Quadern oder miniaturisierten Gebrauchsgütern bekannt geworden. Da Milchpulver selbst nur schlecht direkt verpreßbar ist bzw. bei hohem Preßdruck die erhaltenen Formkörper nicht ausreichend löslich sind, wurden einerseits verpressungsfördernde Stoffe und andererseits Sprengmittel zugesetzt. Dennoch lösen sich auf diese Weise hergestellte Produkte nicht befriedigend in Kaffee oder Tee. Auch sinken die Formen auf den Boden des Trinkgefäßes, so daß der Konsument die Auflösung nicht visuell verfolgen kann.

Desweiteren werden in der DE-Schrift 93 13 062 U1 Milch enthaltende Festprodukte beschrieben, die durch Gefriertrocknung aus einer Mischung aus Milch, Milchkonzentrat, Milchpulver, Milchpulverersatz und Wasser erhalten werden. Die Ausgangslösungen weisen einen Feststoffgehalt von 10 bis 35 % auf, und enthalten gelbildende Zusätze in Form von Stärke, Cellulosederivaten oder Gelatine in einer Menge von 5 bis 25 % der Trockensubstanz.

So hergestellte Formkörper haben ein geringes spezifisches Gewicht und schwimmen auf dem Getränk. Nachteilig ist der geringe Fescstoffgehalt der Ausgangsmischung, durch den sehr große Mengen Wasser bei der Gefriertrocknung entzogen werden müssen. Außerdem besitzen diese Produkte keine ausreichende Weißkraft und beeinträchtigen den Geschmack des zu weißenden Getränks. Nachteilig ist auch, daß die Formkörper teilweise schon bei der Handhabung zerbröseln.

Aufgabe der vorliegenden Erfindung ist es, geformte Festprodukte auf Basis von Milch bzw. Milchpulver bereitzustellen, die sowohl kostengünstig herzustellen als auch sehr gut in heißen Getränken, wie Kaffee oder Tee, löslich sind.

Diese Aufgabe wird durch die Merkmale des Hauptanspruchs gelöst und durch die Merkmale der Unteransprüche gefördert.

Die erfindungsgemäßen Festprodukte werden durch Trocknung einer wässrigen Lösung auf Wassergehalte von unter 3 %, vorzugsweise von unter 0,5 % erhalten.

Die wässrige Lösung sollte Wassergehalte von 60 bis 80 Gew.-%, vorzugsweise 65 bis 75 Gew.-% haben. Zwar erfordert die Verdampfung von mehr Wasser mehr Energie, wodurch die Herstellungskosten steigen. Andererseits müssen die Inhaltsstoffe vor der Trocknung homogen gelöst bzw. emulgiert bzw. dispergiert sein, um die Bildung von Klumpen beim Auflösen des geformten Festprodukts im zu weißenden Getränk zu verhindern.

Erfindungsgemäß enthält die wässrige Lösung 20 bis 35 Gew.-%, vorzugsweise 25 bis 30 Gew.-% und insbesondere etwa 28 Gew.-%, eines Magermilchpulvers. Das Magermilchpulver besitzt vorzugsweise einen Fettgehalt von unter 1 %, insbesondere im Bereich von 0 bis 0,3 %. Gut geeignet sind beispielsweise sprühgetrocknete, nicht verdichtete Milchpulver mit Schüttdichten im Bereich von etwa 400 bis 600 g/l. Typischerweise enthält das Milchpulver 34 - 37 % Protein, 49 - 54 % Lactose, 7 - 9 % Asche, weniger als 1 % Fett und unter 5 % Wasser. Bevorzugt wird als Magermilchpulver ein sogenanntes "Halb-Instant-Produkt", wie es unter der Bezeichnung Ti HF von der Firma BMI Bayrische Milchindustrie eG erhältlich ist, verwendet.

Weiterhin enthält die wässrige Lösung, aus der das erfindungsgemäße Festprodukt hergestellt wird, 0,1 bis 5 Gew.-%, vorzugsweise 0,5 bis 3 Gew.-% und insbesondere 1 bis 2 Gew.-% eines Milcheiweiß. Das Milcheiweiß verstärkt die Weißkraft des Produkts.

Erfindungsgemäß wird ein pulveriges Trockenprodukt eingesetzt. Bevorzugt wird ein aus frischer Magermilch hergestelltes, sprühgetrocknetes Milchprotein eingesetzt, das durch eine ausgezeichnete Wasserlöslichkeit und geringe Korngrößen gekennzeichnet ist. Eine typische Zusammensetzung des Milcheiweißpulvers ist: 92,9 % Protein, 0,1 % Lactose, 0,8 % Fett, 3,9 % Feuchte, 3,6 % Asche. Das Schüttgewicht liegt im allgemeinen bei 500 bis 550 g/l. Insbesondere wird ein unter der Bezeichnung Alanate 180 von der Firma New Zealand Milk Products vertriebenes Milcheiweiß eingesetzt.

Bevorzugt werden besonders säureresistente Magermilchpulver und Milcheiweißpulver verwendet. Selbstverständlich können auch fertige Lösungen oder Konzentrate von Magermilch und/oder Milcheiweiß eingesetzt werden. Diese sind jedoch nicht so gut lagerfähig wie Trockenprodukte und von daher weniger bevorzugt.

Der wässrigen Lösung, aus der das erfindungsgemäße Produkt hergestellt ist, wird außerdem noch ein Puffersalz in Mengen von 0,05 bis 1 Gew.-%, vorzugsweise 0,1 bis 0,5 Gew.-% zugesetzt. Bevorzugt wird dieses als Pulver mit Schüttdichten im Bereich von 300 bis 500 g/l eingesetzt.

Das Puffersalz entfaltet seine Wirkung beim Lösen des erfindungsgemäßen Festprodukts in dem heißen Getränk. Durch Bindung der im Kaffee enthaltenen Kaffeesäuren wird ein Ausflocken des Milcheiweiß verhindert. Das Puffersalz sollte gut wasserlöslich sein.

Bevorzugt wird als Puffersalz ein Hydrogenphosphat, insbesondere Dikaliumhydrogenphosphat, z. B. erhältlich von BK Giulini Chemie, verwendet.

Die erfindungsgemäßen Festprodukte können auch mit an sich von Filmtabletten bekannten Überzügen versehen werden, die zum einen die Stabilität bei der Handhabung erhöhen und zum anderen die Lagerfähigkeit verbessern.

In dem geformten Festprodukt können zusätzlich beispielsweise Süßstoffe und/oder Geschmacksstoffe und/oder Konservierungsmittel enthalten sein. Diese können entweder ebenfalls in der wässrigen Lösung gelöst oder bereits in gelöster Form zugefügt werden. Vorzugsweise werden sie nur einem gegebenenfalls vorhandenen Überzug zugesetzt. Bei der Auswahl der Zusätze ist zum einen eine gute Wasserlöslichkeit und zum anderen ihre Zulassung als Lebensmittelzusatzstoff ausschlaggebend. Außerdem sollten z. B. Konservierungsstoffe geschmacksneutral sein. Als Geschmacksstoffe kommen z. B. Vanille-, Schokolade- oder Amarettoaroma in Frage.

Die Herstellung der erfindungsgemäßen Festprodukte erfolgt bevorzugt durch Gefriertrocknung.

Dazu werden die Inhaltsstoffe Magermilchpulver, Milcheiweiß und Puffersalz sowie gegebenenfalls weitere Zusätze mit Wasser in an sich bekannter Weise zu einer homogenen Lösung (die Bezeichnung Lösung umfaßt im folgenden auch Emulsionen oder Dispersionen) vermischt. Dies kann beispielsweise durch Vermischen der festen Ausgangsstoffe und gemeinsames Eintragen in Wasser oder durch aufeinanderfolgendes oder gleichzeitiges Zudosieren der Ausgangsstoffe in die wässrige Lösung erfolgen. Vorzugsweise werden die Pulver langsam unter Rühren in Wasser eingetragen. Das Wasser sollte bei der Zumischung zweckmäßigerweise Temperaturen von 20 bis 30 °C, vorzugsweise von etwa 25 °C aufweisen.

Ein Wassergehalt im Bereich von 65 bis 75 Gew.-%, insbesondere von etwa 70 Gew.-% hat sich in Bezug auf die Forderungen nach einer homogenen Auflösung der Feststoffe und der Verwendung von möglichst wenig Wasser als besonders geeignet erwiesen. Die wässrige Lösung kann gewünschtenfalls vor der Trocknung sterilisiert werden. Dies ist aber im allgemeinen nicht erforderlich.

Anschließend wird die wässrige Lösung in eine Form gefüllt, die die erwünschte Gestalt des Festprodukts aufweist. Als Form kommen sowohl einfache geometrische Formen, wie Würfel, Quader, Kegel, Kugeln etc., als auch stilsierte Formen von miniaturisierten Gebrauchsgütern wie Auto, Flugzeug, Lokomotive oder auch Kleeblätter, Herzen etc. in Frage.

Das Material der Form ist nicht wesentlich; gut geeignet sind Formen aus Metall oder Kunststoff.

Die Lösung wird in der Form eingefroren, üblicherweise bei Temperaturen von etwa -15 bis -25 °C, meist ca. -20 °C. Die darauffolgende Gefriertrocknung erfolgt in an sich bekannter Weise und kann entweder in der Form erfolgen oder die gefrorenen Festkörper werden dazu aus der Form gelöst. Die Größe der Formen sollte so bemessen sein, daß die erhaltenen Festprodukte, ähnlich wie Zuckerwürfel, je nach gewünschtem Weißegrad in verschiedener Anzahl eingesetzt werden können.

In der Regel weist daher ein Festkörper nach der Trocknung ein Gewicht von 0,5 bis 1 g auf. Diese Menge ist zum Weißen von einer Tasse (ca. 100 ml) Kaffee oder Tee ausreichend.

Bei geeigneten Größen der Formen für die Festkörper beansprucht das Gefrieren der Lösung auf Temperaturen von -20 °C in der Regel 1 bis 2,5 Stunden. Zur Trocknung werden dann im allgemeinen etwa 8 bis 12 Stunden benötigt.

Selbstverständlich kann die Lösung auch als Block eingefroren werden, aus dem nach dem Gefrieren bzw. nach der Trocknung die gewünschten Portionsgrößen z. B. durch Zuschneiden hergestellt werden. Dieses Vorgehensweise ist wegen der einfacheren Herstellung insbesondere bei würfel- oder quaderförmigen Produkten bevorzugt, wobei zweckmäßigerweise flache Schalen als Form verwendet werden. Die Schichtdicken sollten dabei im Hinblick auf den höheren Zeitaufwand für das Gefrieren und gegebenenfalls insbesondere für die Trocknung nicht zu groß gewählt werden.

Nach der Trocknung kann das Produkt, wenn dies nicht schon vorher erfolgte, aus der Form genommen und verpackt werden.

Ebenso kann die Form für das Gefrieren und Trocknen der Lösung als Teil der Verpackung benutzt werden und mit einer geeigneten dünnen Kunststoff- oder Metallfolie verschlossen werden.

Da das Produkt mit der Zeit Wasser aufnimmt und dann druckempfindlicher wird, sollte es vorzugsweise trocken gelagert werden oder so verpackt sein, daß Feuchtigkeit ferngehalten wird. Beispielsweise ist eine Verpackung in Schlauchfolie unter Vakuum und/oder Schutzgas, wie sie an sich von Trockenzucker bekannt ist, gut geeignet.

Durch den geringeren Wassergehalt der Ausgangslösung ist die Herstellung kostengünstiger als bei bekannten Produkten. Die erfindungsgemäßen Festprodukte sind sehr stabil und dabei überraschenderweise trotzdem in Kaffee und Tee sehr gut löslich. Das erfindungsgemäße Festprodukt ist desweiteren fettärmer als die herkömmlichen, üblicherweise mit Fetten versetzten Kaffeeweißer-Pulver.

Die erfindungsgemäßen Festprodukte eignen sich durch ihre gute Handhabbarkeit und Haltbarkeit besonders zur Bewirtung von Passagieren in Flugzeugen und anderen Verkehrsmitteln sowie zur Verwendung in der Gastronomie. Aber auch in Krankenhäusern oder Alten- und Pflegeheimen ist die gute Lagerfähigkeit und die unkomplizierte Anwendung und Dosierung vorteilhaft.

Das folgende Beispiel soll die Erfindung veranschaulichen, ohne sie jedoch zu beschränken.

### Beispiel

In 528 g Wasser mit einer Temperatur von 24 °C werden unter Rühren portionsweise 211 g sprühgetrocknetes Magermilchpulver, 11 g Milcheiweißpulver und 2,1 g Dikaliumhydrogenphosphat gegeben.

Die Lösung wurde dann in Portionen von je ca. 150 g in 5 runde Stellplatten mit einem Rand von 1 bis 2 cm Höhe gegeben, innerhalb von 1,5 bis 2 Stunden auf etwa -20 °C abgekühlt, 7,5 Stunden bei dieser Temperatur gefriergetrocknet und noch 0,5 Stunden nachgetrocknet. Man erhält je Stellplatte Festprodukt mit einem Gesamtgewicht von etwa 44 g. Analog wurden 97 g Lösung in einer Eiswürfelschale gefriergetrocknet. Dabei wurden 29 g Festprodukt erhalten.

Die Festprodukte lassen sich durch leichtes Klopfen gut bis sehr gut aus den Stellplatten lösen. Sie werden in Quader mit einem Gewicht von etwa 0,6 bis 0,8 g zerteilt.

Die Löslichkeit wurde in einem heißen Getränk aus 100 ml Wasser und 2 g Instantkaffee geprüft. Die Ergebnisse sind in der folgenden Tabelle dargestellt.

| Produkt von | Einwaage | Lösungsverhalten |
|---|---|---|
| Stellplatte 1 | 0,68 g | vollständige Lösung |
| Stellplatte 2 | 0,67 g | vollständige Lösung |
| Stellplatte 3 | 0,67 g | vollständige Lösung |
| Stellplatte 4 | 0,64 g | vollständige Lösung |
| Stellplatte 5 | 0,74 g | vollständige Lösung |
| Eiswürfelschale | 0,62 g | vollständige Lösung |

Im Vergleich zu 0,70 g Kaffeesahne zeigen alle Proben eine größere Weißkraft.

## Patentansprüche

1. Geformtes Festprodukt aus Milchpulver, **dadurch gekennzeichnet,** daß eine wässrige Lösung, die 20 - 35 Gew.-% Magermilchpulver, 0,1 - 5 Gew.-% Milcheiweiß und 0,05 - 1 Gew.-% eines Phosphatpuffersalzes enthält, bis zu einem Wassergehalt von unter 3 % getrocknet und geformt wird.

2. Geformtes Festprodukt gemäß Anspruch 1, **dadurch gekennzeichnet,** daß das Festprodukt herstellbar ist, indem die wässrige Lösung in eine Form gegossen und gefriergetrocknet wird.

3. Geformtes Festprodukt gemäß Anspruch 1 oder 2, **dadurch gekennzeichnet,** daß die wässrige Lösung das Magermilchpulver in einer Menge von 25 bis 30 Gew.-% enthält.

4. Geformtes Festprodukt gemäß einem der Ansprüche 1 bis 3, **dadurch gekennzeichnet**, daß die wässrige Lösung das Milcheiweiß in einer Menge von 0,5 bis 3 Gew.-% enthält.

5. Geformtes Festprodukt gemäß einem der Ansprüche 1 bis 4, **dadurch gekennzeichnet,** daß als Milcheiweiß ein unter der Bezeichnung Alanate 180 vertriebenes Produkt verwendet wird.

6. Geformtes Festprodukt gemäß einem der Ansprüche 1 bis 5, **dadurch gekennzeichnet**, daß die wässrige Lösung das Puffersalz in einer Menge von 0,1 bis 0,5 Gew.-% enthält.

7. Geformtes Festprodukt gemäß einem der Ansprüche 1 bis 6, **dadurch gekennzeichnet,** daß ein Hydrogenphosphat als Puffersalz verwendet wird.

8. Geformtes Festprodukt gemäß Anspruch 7, **dadurch gekenn**zeichnet, daß Dikaliumhydrogenphosphat als Puffersalz verwendet wird.

9. Geformtes Festprodukt gemäß einem der Ansprüche 1 bis 8, **dadurch gekennzeichnet,** daß das Festprodukt mit einem aus der Galenik an sich bekannten Überzug versehen ist.

10. Geformtes Festprodukt gemäß einem der Ansprüche 1 bis 9, **dadurch gekennzeichnet,** daß zusätzlich Süßstoffe und/oder Geschmacksstoffe und/oder Konservierungsmittel, insbesondere in dem Überzug gemäß Anspruch 9, enthalten sind.
